# EUROPEAN PATENT APPLICATION

(11) **EP 4 449 853 A1**
(43) Date of publication of application: **23.10.2024**
(21) Application number: 23169316.9
(22) Date of filing: 21.04.2023
(51) Int. Cl.: A01D 75/18, A01D 89/00

(54) **CONTROL SYSTEM OF A GRASS PICKUP ASSEMBLY WITH FOREIGN OBJECT DETECTION AND CORRESPONDING CONTROL METHOD**

(71) Applicant: CNH Industrial Belgium N.V., 8210 Zedelgem (BE)
(72) Inventor: Blancke, Jeffrey, 8210 Zedelgem (BE); Van Belleghem, Stijn, 8210 Zedelgem (BE); Willems, Pieter, 8210 Zedelgem (BE); Dimov, Stefan, 8210 Zedelgem (BE)
(74) Representative: CNH Industrial IP Department

(57) **Abstract**

The present invention relates to a control system (80) for controlling a pickup assembly attached to an agricultural harvester (20). The pickup assembly (10) comprises a pickup drum (11) with pickup tines (72) operable for transport to a crop inlet (21) of the harvester (20) during active rotation of the pickup drum (11) and one or more drive systems operable to rotate the pickup drum (11). The control system (80) comprises a detector (27) for detecting a foreign object (55) in the picked-up crop (50) and one or more controllers (82) configured to receive a detector signal that is indicative of a foreign object (55) in the picked-up crop (50) and to control the one or more drive systems to stop active rotation of the pickup drum (11 and resist rotation of the pickup drum (11) in a direction opposing the pickup direction.

## Description

### TECHNICAL FIELD

The present invention relates to a control system for controlling a pickup assembly of an agricultural harvester. Aspects of the invention relate to a control system, to a pickup assembly, to a harvesting system, and to a method of controlling a pickup assembly.

### BACKGROUND

Certain agricultural machines, such as forage harvesters, forage wagons and balers, collect crop material that has been cut from the field. The component that gathers the crop material and feeds it further into the machine for processing is generally known as a pickup assembly, which is connectable to and usable with the forage harvester. A pickup assembly typically comprises a pickup unit, in the form of a pickup drum or reel rotatably mounted on a pickup assembly frame. The pickup drum has radially projecting tines arranged to collect the crop material and to propel the crop material into a feeding auger. The feeding auger moves the crop laterally towards a feed channel through which the crop material is conveyed to a crop inlet of the harvester. The crop is collected at the crop inlet by infeed rollers of the harvester for subsequent processing, which may involve baling, threshing, chopping, storing and/or depositing, for example.

European patent no. EP3082398 B1 discloses such an agricultural machine further equipped with a foreign object detection system, such as a metal detector, configured to detect foreign objects in the collected crop. In this context, foreign objects may typically include metal parts, wood, or rocks, amongst other objects that can prove dangerous for the agricultural implements or the cattle that would eventually consume the picked-up crop. Detectors are available for detecting such foreign objects in the crop flow and, upon detecting a foreign object, the machine is configured to stop the feed of crop material to the crop inlet of the harvester and to bring the harvester to a standstill. For this purpose, the machine may be configured to bring the infeed rollers to a stop, along with the pickup drum and auger of the pickup assembly. By way of example, the machine may control a drive assembly of the pickup assembly to stop actively rotating the pickup drum in a pickup direction and, instead, allow the pickup drum to rotate freely. This makes it possible to remove the foreign object before it reaches the cutter drum, or the blower, of the forage harvester, where it might cause extensive damage.

However, while the implements such as the infeed rollers may be brought to a standstill rapidly (for example within 300 milliseconds of detection), the agricultural machine continues to drive forward, for example due to the momentum or slower reaction speed of the driver. As the machine continues to drive forward, the cut-down crop is pushed along with the machine (since the crop intake has stopped) producing a crop build-up that bears against the pickup drum. As the pickup drum runs freely at this time, the inventors have found that the crop build-up drives the pickup drum to rotate in an opposing direction to the pickup direction, which can lead to bending and/or deformation of the pickup tines, impairing their subsequent ability to perform effectively. For example, the pickup assembly may include one or more tine guards defining passage(s) through which the pickup tines pass in the pickup direction. However, when the pickup tines are rotated in the opposing direction by the build-up of crop material, there is a tendency for crop material to become lodged between the tine guards and the pickup tines, blocking the passage(s) and creating significant bending stress in the pickup tines, leading to tine failures.

It is an aim of the present invention to address one or more of the disadvantages associated with the prior art.

### SUMMARY OF THE INVENTION

According to an aspect of the invention there is provided a control system for controlling a pickup assembly attached to an agricultural harvester. The pickup assembly comprises: a pickup drum with pickup tines operable to pick up crop from the ground for transport to a crop inlet of the harvester during active rotation of the pickup drum; and one or more drive systems operable to rotate the pickup drum in a pickup direction. The control system comprises: a detector for detecting a foreign object in the picked-up crop; and one or more controllers configured to: receive a signal from the detector that is indicative of a foreign object in the picked-up crop; and in dependence on the received signal, control the one or more drive systems to: stop active rotation of the pickup drum; and resist rotation of the pickup drum in a direction opposing the pickup direction.

In this manner, when a foreign object is detected in the collected crop, the control system automatically controls the drive system(s) to stop actively rotating the pickup drum in the pickup direction, and prevents free-running of the pickup drum by resisting rotation of the pickup drum in the opposing direction as the harvester continues to drive forward over the cut-down crop. The control system therefore prevents or substantially inhibits rotation of the pickup drum in the direction opposing the pickup drum, for example by providing a resistance torque, thereby mitigating damage to the pickup tines from crop transfer in the opposing direction. The control system therefore reduces the risk of damage to the pickup assembly during harvesting operations, leading to fewer replacements, and lowering the operational costs of crop harvesting.

In examples, the pickup assembly may include at least one tine guard defining one or more passages, along or through which the pickup tines pass in the pickup direction. The control system controls the drive system to prevent the pickup tines passing along or through the one or more passages in the direction opposing the pickup direction in dependence on the received signal. In this manner, the control system mitigates the collection of crop between the at least one tine guard and the pickup tines as the pickup drum rotates in the direction opposing the pickup direction, mitigating any damage to the pickup tines from a collection of crop blocking the passage(s).

The control system may, for example, be configured to control the drive system to resist or counteract rotation of the pickup drum in the direction opposing the pickup direction due to relative movement of the pickup assembly through the crop on the ground when active rotation of the pickup drum is stopped.

In an example, the control system may control the one or more drive systems to resist rotation of the pickup drum by controlling a resistance torque provided by the one or more drive systems in the direction opposing the pickup direction.

Optionally, the one or more drive systems may include a hydraulic circuit comprising a hydraulic motor configured to control rotation of the pickup drum. The control system may be configured to control a resistance torque provided by the hydraulic motor.

In an example, the hydraulic circuit may further comprise a feed line leading to the hydraulic motor and a return line leading from the hydraulic motor. The control system may be configured to control a hydraulic pressure of the feed line to provide the resistance torque. For example, the control system may be configured to regulate the hydraulic pressure of the feed line to maintain a pressure of at least 15 bar in dependence on the received signal.

Optionally, the control system may be configured to regulate the hydraulic pressure of the feed line to maintain a pressure of less than or equal to 30 bar in dependence on the received signal.

Optionally, the detector is a metal detector for detecting metallic foreign objects. In other examples, the detector may be a vibration sensor for detecting other foreign objects in the collected crop.

In an example, the detector may be arranged at the crop inlet of the harvester. The closer the detected is arranged to the crop inlet of the harvester, the earlier the foreign object can be detected. In an example, the detector may be arranged inside the pickup assembly and connected to the one or more controllers.

In an example, the pickup assembly may further include an auger operable to transport the picked-up crop material to the crop inlet during active rotation of the auger. The one or more controllers may be configured to control the one or more drive systems to stop active rotation of the auger in dependence on the received signal. In this manner, the auger can be controlled to prevent admission of the foreign object into the harvester, by stopping the conveyance of the crop to the crop inlet.

In an example, the harvester includes a plurality of infeed rollers for collecting the crop at the crop inlet. The one or more controllers may be further configured to control the one or more drive systems to stop active rotation of the infeed rollers in a collection direction in dependence on the received signal. In this manner, the infeed rollers can be controlled to prevent admission of the foreign object into one or more further implements of the agricultural harvester, such as a cutting drum, by stopping the conveyance of the crop through the crop inlet.

According to another aspect of the invention there is provided a pickup assembly for an agricultural harvester. The pickup assembly comprises: a pickup drum with pickup tines operable to pick up crop from the ground for transport to a crop inlet of the harvester during active rotation of the pickup drum; one or more drive systems operable to rotate the pickup drum in a pickup direction; and a control system as described in a previous aspect of the invention.

The pickup assembly may further include at least one tine guard defining one or more passages, along or through which the pickup tines pass in the pickup direction.

According to another aspect of the invention there is provided a harvesting system comprising: an agricultural harvester; and a pickup assembly, as described in a previous aspect of the invention, attached to the agricultural harvester; or a pickup assembly attached to the agricultural harvester and a control system as described in a previous aspect of the invention.

According to yet another aspect of the invention there is provided a method of controlling a pickup assembly attached to an agricultural harvester. The pickup assembly comprises: a pickup drum, with pickup tines, operable to pick up crop from the ground for transport to a crop inlet of the harvester during active rotation of the pickup drum; and one or more drive systems operable to rotate the pickup drum in a pickup direction. The method comprises the steps of: detecting a foreign object in the collected crop; and in dependence on the received signal, controlling the one or more drive systems to: stop active rotation of the pickup drum; and resist rotation of the pickup drum in the direction opposing the pickup direction.

According to another aspect of the invention there is provided a non-transient, computer-readable storage medium storing instructions thereon that when executed by one or more processors cause the one or more processors to execute a method as described in a previous aspect of the invention.

Within the scope of this invention it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example with reference to the accompanying drawings, in which:
Figure 1 schematically shows a perspective view of a forage harvester with a pickup assembly that may embody one or more of the inventions described herein;
Figure 2 schematically shows a cross-sectional view of the pickup assembly and parts of the forage harvester of Figure 1;
Figure 3 schematically shows a cross-sectional view of parts of the pickup assembly of Figure 1; and
Figure 4 shows an exemplary method of controlling the pickup assembly, shown in Figure 1, in accordance with an embodiment of the invention.

### DETAILED DESCRIPTION

Embodiments of the invention relate to systems and methods for controlling a pickup assembly attached to an agricultural harvester during harvesting operations.

The pickup assembly may be selected from a plurality of headers that are attachable to the harvester to collect crop material that has been cut from a field. The pickup assembly may comprise a pickup unit, typically in the form of a pickup drum, or reel, rotatably mounted on a frame of the pickup assembly. The pickup drum has radially arranged projecting tines for collecting the crop material, and the pickup drum is driven in a pickup direction by one or more drive systems of the pickup assembly to pick up crop material from the ground and propel the crop material into a feeding auger of the pickup assembly. The feeding auger conveys the crop material laterally towards a feed channel, through which the crop is conveyed to a crop inlet of the harvester. At the crop inlet, the crop may be collected by one or more infeed rollers of the harvester for subsequent processing by downstream implements, which may involve baling, threshing, chopping, storing, and/or depositing, for example.

In order to protect the harvester from damage during a harvesting operation, a control system is used having a foreign object detection system for detecting foreign objects in the collected crop. For example, the control system may include a metal detector for detecting metallic objects in the collected crop received at the crop inlet.

If a foreign object is detected in the crop, the control system is configured to stop the feed into the harvester, for example by controlling one or more drive systems to stop active rotation of the infeed rollers, the auger and/or the pickup drum. The object can therefore be stopped before reaching the cutter drum, or the blower, of the forage harvester, where it might cause extensive damage.

However, while active rotation of the infeed rollers, auger and/or pickup drum, can be stopped almost instantaneously upon receiving a signal that is indicative of a foreign object in the collected crop, the harvester may continue to drive forward through the cut-down crop material. In the absence of any further control actions, the cut-down crop may therefore build up against the pickup drum, leading to damage and deformation of the pickup tines.

For example, when the pickup drum is allowed to rotate freely, it has been found that the crop build-up may urge the pickup tines to rotate in a direction opposing the pickup direction and that, during such movement, the crop material may collect between the pickup tines and one or more tine guards that define passage(s) along or through which the pickup tines pass in the pickup direction. The crop material that gathers between the pickup tines and the tine guard(s) creates a blockage of the passage(s), obstructing movement of the pickup tines in the direction opposing the pickup direction, such that the pickup tines bear against the collected crop, leading to bending and/or deformation of the pickup tines as the harvester continues to drive forward.

Advantageously though, the control system of the present invention is configured to control the drive system(s) to stop active rotation of the pickup drum when foreign objects are detected in the collected crop and to resist rotation of the pickup drum in a direction opposing the pickup direction, e.g. by controlling a resistance torque or hydraulic pressure of the drive system(s). In this manner, the control system can operate the drive system(s) to counteract any rotation in the opposing direction caused by the build-up of crop in front of the pickup assembly.

It is expected that the methods and systems of the present invention will therefore mitigate damage to the pickup assembly during harvesting and thereby reduce the need for replacement equipment, lowering the operational costs of crop harvesting.

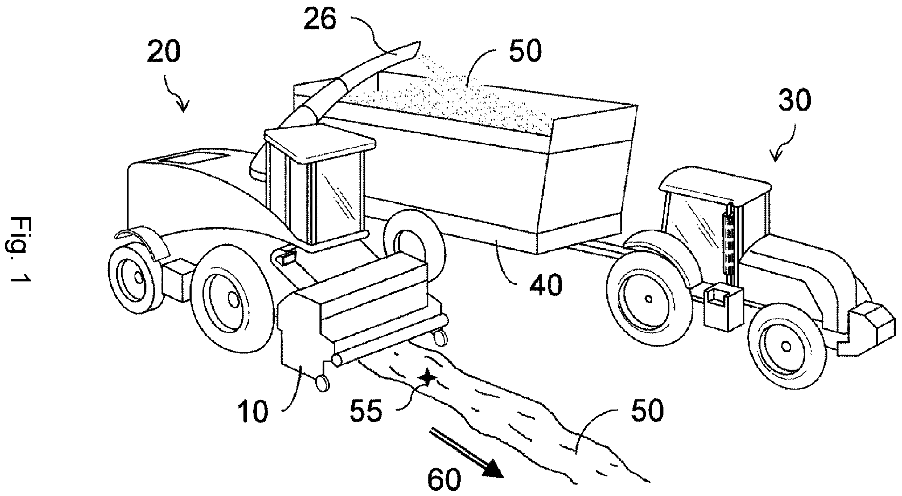

The methods and systems shall now be described in further detail with reference to Figures 1 to 4.

In the following, an exemplary agricultural harvester (also referred to as a 'harvester') is described with which the above-described invention may be advantageously used. In addition to the invention claimed in the appended claims, further improvements may be implemented as described. It is noted that, while some features of these other improvements may appear essential in the context of those other improvements, it should not be concluded therefrom that such features are essential to the now claimed invention too. Similarly, it may be suggested that a feature essential for the currently claimed invention is merely optional in the context of the other possible improvements, which is not to be interpreted as an attempt to broaden the scope of protection beyond that which is claimed in the appended claims.

The directions up, down, forward, and rearward are herein defined relative to the general orientation and direction of an agricultural harvester, and the pickup assembly attached thereto, driving over a field and picking up crop, substantially as shown in Figure 1, which shall now be discussed in more detail.

Figure 1 shows an exemplary embodiment of a pickup assembly 10 attached to an agricultural harvester 20. Together, the pickup assembly 10 and the agricultural harvester 20 may be considered to form a harvesting system 1. In this example, the agricultural harvester 20 is a forage harvester. However, this example is not intended to be limiting on the scope of the invention and, in other examples, the invention can also be applied to, for example, a baler, a loading wagon or any other agricultural harvester that picks up crop, e.g. cut down crop, from a field.

In the following examples, the crop to be picked up is grass, which has previously been deposited in a swath 50 on the field by a swath mower, as shown in Figure 1. However, the invention can also be applied to picking up other crop species, such as alfalfa for example. In general, the pick-up assembly 10 is configured to pick up the swath 50 during a harvesting operation and to transport the swath 50 to a crop inlet (not shown in Figure 1) of the forage harvester 20 for further processing. The subsequent processing performed by the harvester 20 may involve baling, threshing, chopping, storing and/or depositing, for example. As an example, Figure 1 shows a harvester 20 configured to cut the collected grass inside the harvester 20, which is subsequently discharged through a blower, via a spout 26 into an accompanying wagon 40. In this example, the wagon 40 is pulled by a tractor 30, but it shall be appreciated that a self-propelled dump truck may be used instead.

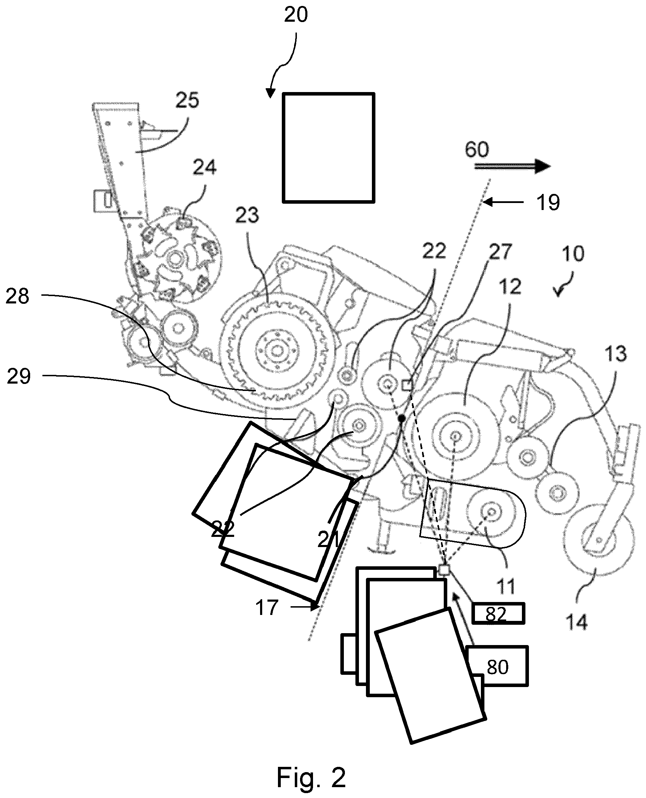

Figure 2 shows a cross section of the pick-up assembly 10 and parts of the forage harvester 20 in more detail. The pick-up assembly 10 is shown to include a pickup unit that includes a rake constituted by a reel or pickup drum 11 with pick-up fingers or tines (not shown in Figure 2) for picking up the cut-down crop 50 from the field. The pickup drum 11 is configured to rotate about a pickup axis that is transverse to the direction of movement of the harvester 20. Hence, as the forage harvester 20 drives forwards over the swath 50 (in the direction 60), the pickup drum 11 is actively rotated in a pick-up direction (counter-clockwise in Figure 2), so that the pickup tines take the crop in the swath 50 from the field. In particular, the rotating tines pick the crop material up from the ground and move it toward a crop material conveyor, which takes the form of a feeding auger 12 in this example. The auger 12 similarly rotates in a direction of collection to transport the picked-up crop material toward the crop inlet 21 of the harvester 20.

As shown in Figure 2, the pickup assembly 10 may include one or more support wheels 14 for guiding the pick-up assembly 10 in a stable manner, and at a suitable height, across the field whilst picking up the cut-down crop 50. In examples, the pickup assembly 10 may also include a windguard 13, as shown in Figure 2, that prevents crop 50 picked up by the pickup drum 11 from being blown away before being guided via the auger 12 to the crop inlet 21 of the forage harvester 20. In examples, the windguard 13 can feature one or more additional rolls or reels to support the function of the pickup drum 11. These additional rolls may rotate passively with the picked-up crop 50 or else may be actively driven along with the pickup drum 11 and/or the auger 12.

In each case, the gathered crop 50 therefore enters the harvester 20 at the crop inlet 21, where the crop may be fed through a set of infeed rollers 22. In Figure 2, four infeed rollers 22 of the forage harvester 20 are shown, which pull the crop 50 supplied by the auger 12 through the crop inlet 21 into the forage harvester 20 for subsequent processing. In other examples, it shall be appreciated that the harvester 20 may include more, or fewer, infeed rollers 22 for this purpose. The infeed rollers 22 are arranged at a front end 19 of the harvester 20 that connects to the pickup assembly 10. The front end 19 of the harvester 20 may therefore be configured to serve as a support structure for the pickup assembly 10 and may further include interfacing parts of a connection system (not shown) for connecting the harvester 20 to any one of a plurality of different headers (not shown), each suited to a different type of crop. In this respect, the pick-up assembly 10 is one such header that is particularly suited to the harvest of cut-down crop 50, and the connection system may include cooperating components on the harvester 20 and the pick-up assembly 10 for such attachment. For example, a rear end 17 of the pickup assembly 10 may be coupled to the front end 19 of the harvester 20 (as shown in Figure 2).

In this example, the infeed rollers 22 are configured to guide the collected crop 50 in the form of a mat, for example with a given thickness, towards a cutting drum 23 arranged inside the harvester 20. The cutting drum 23 rotates about a rotation axis that is transverse to the direction of movement of the crops 50. Knives 28 are typically mounted on, and distributed along, the full circumference of the cutting drum 23, so that the knives 28 pass by a stationary shear bar 29 as the drum 23 rotates. In this manner, the collected crop is chopped into small pieces which are further transported from the cutting drum 23 to a collection area. In this example, the chopped material is then ejected by a blower 24 through an exit 25 to a rotatable spout 26. However, as mentioned previously, while the agricultural harvester 20 is illustrated and described as a forage harvester, this arrangement is not intended to be limiting on the scope of the invention. In some examples, the agricultural harvester 20 may take other suitable forms, such as a baler, e.g., a large square baler, a small square baler, or a round baler.

In examples, the active rotation of the pickup drum 11, the auger 12 and/or the infeed rollers 22 is controlled by one or more drive systems (not shown) of the harvesting system 1. In examples, each of the pickup drum 11, the auger 12 and/or the infeed rollers 22 may be driven by independent drive systems or any combination of such implements may be driven by one or more common drive systems. For example, the harvester 20 and the pickup assembly 10 may each include respective drive source(s) for powering the rotation of the pickup drum 11, the auger 12, and/or the infeed rollers 22. Alternatively, one of the harvester 20 and the pickup assembly 10 may include one or more drive sources and the drive system(s) may include any combination of mechanical, hydraulic and/or electrical transmissions systems for transferring power to the pickup drum 11, the auger 12 and/or the infeed rollers 22 in a controllable manner. Such arrangements are well known in the art and may include conventional transmission means such as PTO's, chains, sprockets (not shown) or belts, and/or hydraulic circuit components.

To give an example, the one or more drive systems may include an internal combustion engine, acting as a drive source on board the harvester 20, not only for tractive power (and powering the harvester processes) but also for powering the attached pickup assembly 10. In this manner, the internal combustion engine may further power the rotation of the pickup drum 11 and the auger 12. The internal combustion engine may in turn be connected to each of those implements by respective transmission systems, forming respective drive system(s) independently controlling the rotation of the individual implements.

For example, the drive system(s) may include a hydraulic circuit on board the pickup assembly 10, which is fluidly and/or mechanically connected to the internal combustion engine of the harvester 20 for transferring power to actively rotate the pickup drum 11. As would be understood by the skilled person, the hydraulic circuit may therefore include a hydraulic motor connected to the pickup drum 11 and a set of hydraulic fluid lines fluidly coupling the hydraulic motor to a hydraulic pump. In turn, the hydraulic pump may be driven by a fluid or mechanical coupling to the internal combustion engine in order to pressurise the hydraulic fluid. In examples, the hydraulic pump could therefore be mounted onboard either the pickup assembly 10 or the harvester 20. In each case, a feed line of the hydraulic circuit is pressurised and leads from the hydraulic pump to the hydraulic motor to actively rotate the pickup drum in the pickup direction, and a return line of the hydraulic circuit leads from the hydraulic motor to return the hydraulic fluid. In this manner, the drive system(s) is controllable to selectively rotate the pickup drum 11 in the pickup direction during a harvesting operation, for example by controlling the fluid pressures in the feed line and/or the return line. The pressures in the hydraulic fluid lines may therefore be controlled to set a desired rotational speed, for example.

A problem exists, however, in that foreign objects 55 (as shown in Figure 1) (e.g. metal objects, stones or bits of wood) may be present in the swath 50, which can be picked up by the pickup assembly 10 and conveyed to the forage harvester 20. This may lead to serious damage in and around the forage harvester 20, and even to unsafe situations. For example, once inside the harvester 20, the foreign objects 55, or parts thereof, may be catapulted by the cutter drum 23 of the forage harvester 20 in a random direction.

Also, when these foreign objects 55, or parts thereof, end up within the crop 50 in the wagon 40, they can constitute a safety risk for the cattle that will be fed by the crop 50.

In order to prevent such foreign objects 55 from ending up in the cutter drum 23 of the forage harvester 20, the foreign objects 55 need to be detected and the crop feed through the crop inlet 22 needs to be stopped to prevent admission into the harvester 20.

For this purpose, the harvesting system 1 advantageously includes a control system 80 (shown in Figure 2) including one or more controllers 82 coupled to a foreign object detection system 27 and the drive system(s) described above. The control system 80 is configured to control the drive system(s) to stop active rotation of the pickup drum 11, and bring the pickup drum 11 to a standstill, in response to receiving a signal from the foreign object detection system 27 that is indicative of a foreign object being detected in the collected crop. In examples, the control system 80 may further control the drive system(s) to stop active rotation of the auger 12 and/or the infeed rollers 22 to the extent required to stop the feed of crop through the crop inlet 21, thereby preventing damage to harvester 20.

Foreign object detection systems 27 that are suitable for this purpose and configured to detect objects, such as metal parts, wood, or rocks, amongst other objects, in the collected crop are known in the art and are not described in detail here to avoid obscuring the invention. However, to give an example, close to the crop inlet 21, for example inside the bottom and/or top infeed roller 22, at least one detector 27 may be provided for the detection of foreign objects 55 in the crop flow. The closer the detector 27 is located to the crop inlet 21, the earlier the infeed rollers 22 can be stopped and the greater the chance that the crop flow can be interrupted before the foreign object 55 disappears into the cutter drum 23. Hence, although the detector 27 is depicted as forming part of the harvester 20 in this example, it shall be appreciated that this is not intended to be limiting on the scope of the invention and, in other examples, the foreign object detection system 27 could additionally or alternatively be incorporated into the pickup assembly 10. In this respect, metal detectors and stone detectors are commonly used in such harvesting systems, but detectors for other types of crop-foreign objects 55 can also be used in combination with the present invention.

In examples, the one or more controllers 82 of the control system 80 may be incorporated onboard one or both of the pickup assembly 10 and the harvester 20. For example, one or more controllers 82 may be housed onboard the pickup assembly 10 and operatively connect to one or more further controllers or devices onboard the harvester 20 by way of electrical connection.

The controller(s) 82 may be in the form of any suitable computing device, for instance one or more functional units or modules implemented on one or more computer processors. Such functional units may be provided by suitable software running on any suitable computing substrate using conventional or customer processors and memory. The one or more functional units may use a common computing substrate (for example, they may run on the same server) or separate substrates, or one or both may themselves be distributed between multiple computing devices. A computer memory may store instructions for performing the methods performed by the controller, and the processor(s) may execute the stored instructions to perform the method.

The control system 80 is therefore configured to receive signals indicative of foreign objects 55 in the collected crop 50 and to execute a set of control actions in response in order to control the drive system(s) to stop active rotation of the pickup drum 11 and, if necessary, the auger 12 and/or the infeed rollers 22.

Accordingly, as soon as a foreign object 55 is detected, the control system 80 may control the drive system(s) to stop active rotation automatically, and thereby bring the implements to a standstill within 300 milliseconds using the foreign objection detection systems that are currently available on the market. Consequently, the crop 50 that includes the foreign object 55, is prevented from reaching the cutter drum 23 and damage to the cutter drum 23 can therefore be avoided.

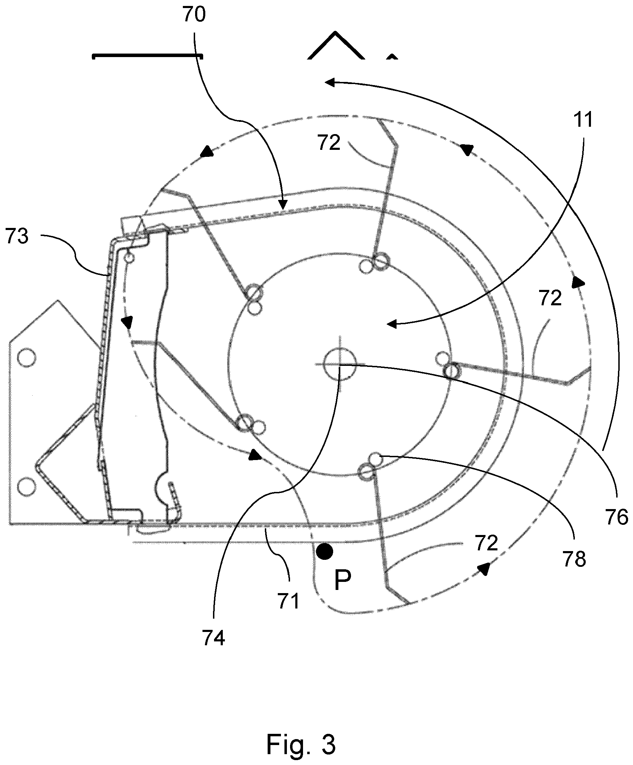

However, while the implements of the pickup assembly 10 and the infeed rollers 22 can be stopped near instantaneously (e.g. within 300 milliseconds), the propulsive drive, and/or the driver, of the forage harvester 20 is slower to respond (e.g. due to the momentum of the harvester 20). Consequently, the forage harvester 20 continues to drive forward through the swath 50, which creates a build-up of grass in the pickup assembly 10. The accumulation or build-up of crop material 50 bears against the pickup drum 11 and is prone to damaging the pickup tines as the harvester 20 progresses forwards, as discussed in more detail with reference to Figure 3.

Figure 3 shows a cross-sectional view of part of an exemplary pickup assembly 10 in accordance with an embodiment of the invention. As shown in Figure 3, the pickup assembly 10 includes one or more tine guards 70, arranged side-by-side, through which the pickup tines 72 pass during rotation of the pickup drum 11 and defining a passage or respective passages around the pickup drum 11, along or through which the pickup tines 72 pass during active rotation of the pickup drum 11 in the pickup direction.

For example, the pickup drum 11 may have a central shaft 74 with a generally horizontal axis 76, and a plurality of tines 72 may be arranged in spaced apart rows along the length of the central shaft 74. As shown in this example, the tines 72 may be mounted on transverse bars 78 that extend between end plates (not shown) fixed to the shaft 74 adjacent the ends thereof, such that the tines 72 move in a predetermined path in order to lift crop material 50 from the ground as the central shaft 74 rotates in the pickup direction.

As the tines 72 move along the path, the tines 72 pass along or through the passage(s) defined by the tine guard(s) 70 around the pickup drum 11. In this example, the tine guards 70 are shown to be substantially D-shaped in side elevation, including a curved guard portion 71 and a rear guard portion 73. In this example, the tine guard(s) 70 are connected to a pickup frame of the pickup assembly 10, for example by the rear guard portion 73, which may be affixed, as by welding, to the pickup frame.

However, problems arise in that, when the one or more drive systems have been stopped and the harvester 20 continues to drive through the swath 50, the crop material builds up against the pickup tines 72 of the pickup drum 11. If the pickup drum 11 is free to rotate, the build-up of crop material 50 may cause the pickup the pickup drum 11 to rotate in a direction opposing the pickup direction. As the pickup drum 11 rotates in the opposing direction, the pickup tines 72 pick up the built-up crop material, which collects between the pickup tines 72 and the tine guards 70, blocking the passage(s) along or through which the tine guards 70 pass. For example, the crop material 50 may be transferred to or become entrapped at the position, P, shown in Figure 3, between the pickup tine 72 and the tine guard 70, creating a blockage of the passage and inhibiting further rotation of the pickup drum 11 in that direction. The pickup tines 72 are therefore obstructed in their movement along / through the passage(s) and subjected to bending stress as the harvester 20 continues to travel through the swath 50. The bending stresses lead to damage and/or deformation of the pickup tines 72, which impairs their subsequent ability to function properly.

It shall be appreciated that the exemplary tine guard(s) 70 are not intended to be limiting on the scope of the invention here but are illustrated to demonstrate exemplary passage(s) along / through which the pickup tines 72 pass during rotation of the pickup drum 11. In other examples, the tine guard(s) 70 may take various suitable forms that are susceptible to the same problems when the passage(s), around the pickup drum 11 become blocked or obstructed as the pickup drum 11 is rotated by the swath 50 in the direction opposing the pickup direction.

The present invention offers a solution to this problem in the form of the control system 80 which is further configured, upon detecting the foreign object 55, to stop active rotation of the pickup drum 11 (and optionally the auger 12 and/or the infeed rollers 22) and to resist rotation of the pickup drum 11 in a direction opposing the pickup direction.

In particular, in the absence of a driving force actively rotating the implements in the pickup and collection directions, the implements may be free to rotate. However, to mitigate the above-described problems, the control system 80 is advantageously further configured to control the one or more drive systems to resist rotation of the pickup drum 11 in a direction opposing the pickup direction (i.e. backdriving the pickup drum 11), for example until the pickup assembly 10 is brought to a standstill. To give an example, the control system 80 may operate the drive system(s) to provide or maintain a torque acting against rotation of the pickup drum 11 in the direction opposing the pickup direction, for example by regulating a hydraulic pressure of the feed line of the hydraulic circuit. For context, the control system 80 may for example, regulate the feed line to maintain a pressure of 30 bar, once active rotation is stopped, in order to prevent or substantially mitigate rotation of the pickup drum 11 in the direction opposing the pickup direction.

By stopping or substantially mitigating rotation of the pickup drum 11 in the direction opposing the pickup direction, the control system 80 mitigates the risk of a blockage of the passage(s) defined by the tine guards 70, thereby mitigate the risk of incurring damage to the pickup tines 72 . In this manner, the pickup assembly 10 is protected from further damage and the harvester 20 can be brought to a standstill in due course to allow for removal of the foreign object 55. Once the harvester 20 has been brought to a standstill, it shall be appreciated that the control system 80 may control the drive system(s) to stop regulating the pressure in the feed line and reduce or remove the counteracting torque so that the pickup drum 11 is free to rotate and the foreign object 55 may be removed.

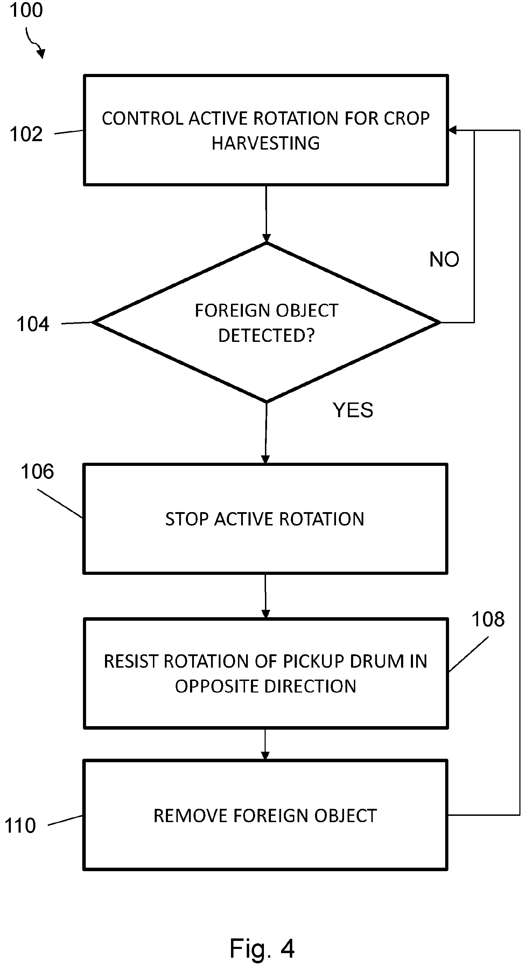

A method 100 of controlling the pickup assembly 10 in accordance with an embodiment of the invention shall now be discussed with additional reference to Figure 4.

The method 100 may be implemented by one or more controllers 82 or other processing modules of the control system 80 associated with the pickup assembly 10 and/or the harvester 20.

In step 102, the harvester 20 is operated to perform a harvesting operation and the pickup assembly 10 is driven through the swath 50 of cut-down crop (as shown in Figure 1). The drive system(s) of the harvesting system 1 actively rotate the pickup drum 11 in the pickup direction to pick up the cut down crop from the swath 50 and propels the crop upwards to the auger 12. The drive system(s) further actively rotate the auger 12 in the collection direction to convey the picked-up crop material towards the crop inlet 21 and the infeed rollers 22 are actively rotated in a collection direction to collect the crop material from the crop inlet 21. The collected crop is passed onwards through the harvester 20 by the infeed rollers 22 for subsequent processing, which may involve baling, threshing, chopping, storing and/or depositing, for example.

During such harvesting, the control system 80 operates the foreign object detection system 27 to monitor the collected crop and determine, in step 104, whether a foreign object 55 is present in the collected crop.

This continues throughout the harvesting operation until encountering a foreign object 55 in the swath 50, which is picked up by the pickup assembly 10 and conveyed to the crop inlet 21.

Accordingly, in step 104, the foreign object detection system 27 detects the foreign object 55 in the collected crop, for example at the crop inlet 21, and transmits a signal to the control system 80 that is indicative of the detected foreign object 55.

In response to receiving the detection signal, the control system 80 controls the stoppage of the feed of crop into the harvester 20, in step 106, to prevent admission of the foreign object 55 into the harvester 20, and thereby to protect the harvester 20 from damage.

For this purpose, the control system 80 controls the drive system(s) to stop active rotation of the pickup drum 11 in the pickup direction and bring the pickup drum to a stop. For example, the control system 80 may control the drive system(s) to reduce the pressure in the feed line of the hydraulic circuit, such that the driving torque on the hydraulic motor operating the pickup drum 11 is reduced towards zero and the pickup drum 11 comes to a standstill. At the same time, or substantially simultaneously, the control system 80 may also control the drive system(s) to stop active rotation of the auger 12 and/or the infeed rollers 22 in the collection direction, and thereby stop the feed of crop to the crop inlet 21.

However, while the various implements may be brought to a standstill almost instantaneously once the active torque is removed, the harvester driver is much slower to react and the harvester 20 will therefore continue to drive forward, pushing along the swath 50 which produces a build-up against the pickup drum 11. In this respect, the relative movement of the pickup assembly 10 over the crop build up creates a torque on the pickup drum 11 acting in a direction opposite to the pickup direction.

In step 108, the control system 80 is therefore further configured to control the drive system(s) to resist rotation of the pickup drum 11 in the direction opposing the pickup direction due to the resistance of the crop-build up. This may be achieved by various methods that are known in the art. To give an example, the control system 80 may be configured to control a hydraulic pressure of the drive system(s), for example by regulating a pressure of the feed line to maintain a torque resisting rotation in the direction opposing the pickup direction. For example, the control system 80 may be configured to regulate the pressure of the feed line to maintain or achieve a pressure of at least 15 bar, and preferably provide a pressure of less than or equal to 30 bar, in step 108. In this manner, The feed line pressure may be suitably calibrated for the torque resulting from the relative movement between the swath 50 and the pickup assembly 10 and the control system 80 may include any suitable control arrangement, such as a feedback control system for regulating the feed line pressure. To give an example, the control system 80 may therefore be configured to: (i) increase the feed line pressure in dependence on a detected increase in torque or rotation of the pickup drum 11 in the direction opposing the pickup direction, and (ii) reduce the feed line pressure if the torque from the resistance of the swath 50 reduces, or the pickup drum 11 starts to move in the pickup direction. However, these examples are not intended to be limiting on the scope of the invention.

In each case, the control system 80 therefore controls the drive system(s) to stop actively rotation of the pickup drum 11 in the pickup direction, in step 106, and to resist rotation of the pickup drum 11 in the direction opposing the pickup direction, in step 108, in response to receiving the signal indicative of the detection of the foreign object 55 in the collected crop. For example, the stopping of the active drive may be executed immediately prior to the controlling the resistance torque, in order to mitigate the risk of damage to the pickup tines 72 or the collection of crop 50 between the pickup tines 72 and the tine guards 70.

In examples, the agricultural harvester 20 may also be brought to a standstill (automatically or manually) in response to detecting the foreign object 55, in step 104. For example, the control system 80 may send a command to a corresponding drive of the harvester or the control system 80 may output an alert to a display of the cab, prompting the driver to remove the foreign object 55 by stopping the vehicle.

Accordingly, once the harvester 20 has been brought to a standstill, the foreign object 55 can be removed from the collected crop, in step 110. For example, upon detecting that the harvester 20 is at a standstill or upon receiving a signal indicative of such a condition, the control system 80 may therefore control the drive system to allow the pickup drum 11 to rotate freely again in order to remove the foreign object 55.

Once the foreign object 55 has been removed from the collected crop, the control system 80 may be configured to detect the absence of the foreign object 55 and to control the drive system(s) to resume actively rotating the pickup drum 11 in the pickup direction, along with driving the auger 12 and/or the infeed rollers 22 in the respective collection directions. This may be performed automatically or in response to a command from the driver. For example, the control system 80 may provide a signal to a notification system (not shown) of the harvester 20 to indicate the removal of the foreign object 55 and to prompt the driver to resume the harvesting operation, for example by pressing a dedicated button or by selecting this activity by means of a graphic user interface.

With the foreign object 55 removed, the harvester 20 can therefore safely resume the harvesting operation.

In this manner, the invention provides for greater protection of the pickup assembly 10, the harvester 20 and its implements, in addition to improved safety, whilst causing minimal disruption to the harvesting operations.

Many modifications may be made to the described examples without departing from the scope of the appended claims.

## Claims

1. A control system (80) for controlling a pickup assembly attached to an agricultural harvester (20), the pickup assembly (10) comprising: a pickup drum (11) with pickup tines (72) operable to pick up crop (50) from the ground for transport to a crop inlet (21) of the harvester (20) during active rotation of the pickup drum (11); and one or more drive systems operable to rotate the pickup drum (11) in a pickup direction; wherein the control system (80) comprises:
a detector (27) for detecting a foreign object (55) in the picked-up crop (50); and
one or more controllers (82) configured to:
receive a signal from the detector (27) that is indicative of a foreign object (55) in the picked-up crop (50); and
in dependence on the received signal, control the one or more drive systems to:
stop active rotation of the pickup drum (11); and
resist rotation of the pickup drum (11) in a direction opposing the pickup direction.

2. A control system (80) according to claim 1, wherein the pickup assembly further includes at least one tine guard (70) defining one or more passages, along which the pickup tines (72) pass in the pickup direction; and the control system (80) controls the drive system to prevent the pickup tines (72) passing along the one or more passages in the direction opposing the pickup direction in dependence on the received signal.

3. A control system (80) according to any preceding claim, wherein the control system (80) controls the drive system to resist rotation of the pickup drum (11) in the direction opposing the pickup direction due to relative movement of the pickup assembly (10) through the crop (50) on the ground when active rotation of the pickup drum (11) is stopped.

4. A control system (80) according to any preceding claim, wherein the control system (80) controls the one or more drive systems to resist rotation of the pickup drum (11) by controlling a resistance torque provided by the one or more drive systems in the direction opposing the pickup direction.

5. A control system (80) according to any preceding claim, wherein the one or more drive systems may include a hydraulic circuit comprising a hydraulic motor configured to control rotation of the pickup drum (11), and wherein the control system (80) is configured to control a resistance torque provided by the hydraulic motor.

6. A control system (80) according to claim 5, wherein the hydraulic circuit further comprises a feed line leading to the hydraulic motor and a return line leading from the hydraulic motor, and the control system (80) is configured to control a hydraulic pressure of the feed line to provide the resistance torque.

7. A control system (80) according to claim 6, wherein the control system (80) is configured to regulate the hydraulic pressure of the feed line to maintain a pressure of at least 15 bar in dependence on the received signal.

8. A control system (80) according to claim 6 or claim 7, wherein the control system (80) is configured to regulate the hydraulic pressure of the feed line to maintain a pressure of less than or equal to 30 bar in dependence on the received signal.

9. A control system (80) according to any preceding claim, wherein the detector (27) is a metal detector for detecting metallic foreign objects, optionally, wherein the detector (27) is arranged at the crop inlet (21) of the harvester (20).

10. A control system (80) according to any preceding claim, wherein the pickup assembly (10) further includes an auger (12) operable to transport the picked-up crop material (50) to the crop inlet (21) during active rotation of the auger (12); and the one or more controllers (82) are configured to control the one or more drive systems to stop active rotation of the auger (12) in dependence on the received signal.

11. A control system (80) according to any preceding claim, wherein the harvester (20) includes a plurality of infeed rollers (22) for collecting the crop (50) at the crop inlet (21); and wherein the one or more controllers (82) are further configured to control the one or more drive systems to stop active rotation of the infeed rollers (22) in a collection direction in dependence on the received signal.

12. A pickup assembly (11) for an agricultural harvester (20), the pickup assembly (11) comprising:
a pickup drum (11) with pickup tines (72) operable to pick up crop (50) from the ground for transport to a crop inlet (21) of the harvester (20) during active rotation of the pickup drum (11);
one or more drive systems operable to rotate the pickup drum (11) in a pickup direction; and
a control system (80) according to any preceding claim.

13. A pickup assembly (10) according to claim 12, wherein the pickup assembly (10) further includes at least one tine guard (70) defining one or more passages, along which the pickup tines (72) pass in the pickup direction.

14. A harvesting system (1) comprising:
an agricultural harvester (20); and
a pickup assembly (10), according to claim 12 or claim 13, attached to the agricultural harvester (20); or
a pickup assembly (10) attached to the agricultural harvester (20) and a control system (80) according to any of claims 1 to 11.

15. A method (100) of controlling a pickup assembly (11) attached to an agricultural harvester (20), the pickup assembly (10) comprising: a pickup drum (11) with pickup tines (72) operable to pick up crop (50) from the ground for transport to a crop inlet (21) of the harvester (20) during active rotation of the pickup drum (11); and one or more drive systems operable to rotate the pickup drum (11) in a pickup direction; the method comprising the steps of:
detecting a foreign object (55) in the collected crop (50); and
in dependence on the received signal, controlling the one or more drive systems to:
stop active rotation of the pickup drum (11); and
resist rotation of the pickup drum (11) in the direction opposing the pickup direction.
